# EUROPÄISCHE PATENTSCHRIFT

(11) **EP 2 519 479 B1**
(45) Veröffentlichungstag und Bekanntmachung des Hinweises auf die Patenterteilung: **23.08.2017**
(21) Anmeldenummer: 10798152.4
(22) Anmeldetag: 31.12.2010
(51) Int. Cl.: C04B 35/536, C04B 35/52, F16J 15/00, H01L 23/00, E04C 2/00, C09C 1/46, H01M 2/00, H01M 4/00, H05B 3/00, C08K 3/04, B32B 18/00, H01M 8/00, F16L 23/00, C04B 37/00

(54) **SCHICHTVERBUNDWERKSTOFF ZUR VERWENDUNG IN EINER REDOX-FLOW-BATTERIE**
LAYERED COMPOSITE MATERIAL FOR USE IN A REDOX FLOW BATTERY
MATÉRIAU COMPOSITE STRATIFIÉ POUR UTILISATION DANS UNE BATTERIE À CIRCULATION D'OXYDO-RÉDUCTION (REDOX-FLOW)

(30) Priorität: 29.10.2010 US 915340; 30.09.2010 DE 102010041822; 20.09.2010 DE 102010041085; 17.03.2010 DE 102010002989; 26.02.2010 DE 102010002434; 16.02.2010 DE 102010002000; 31.12.2009 DE 102009055441; 31.12.2009 DE 102009055440; 31.12.2009 DE 102009055442; 31.12.2009 DE 102009055443; 31.12.2009 DE 102009055444
(43) Veröffentlichungstag der Anmeldung: 07.11.2012
(73) Patentinhaber: SGL Carbon SE, 65201 Wiesbaden (DE)
(72) Erfinder: ÖTTINGER, Oswin, 86405 Meitingen (DE); SCHMITT, Rainer, 86157 Augsburg (DE); BACHER, Jürgen, 86637 Wertingen (DE); MECHEN, Sylvia, 86405 Meitingen (DE); HUDLER, Bastian, 86641 Rain (DE)
(86) Internationale Anmeldenummer: PCT/EP2010/070974
(87) Internationale Veröffentlichungsnummer: WO 2011/080334

(56) Entgegenhaltungen:
- DE-A1-102007 037 435

## Beschreibung

Die vorliegende Erfindung betrifft einen insbesondere zur Verwendung in einer Redox-Flow-Batterie geeigneten Schichtverbundwerkstoff, welcher wenigstens eine Lage eines textilen Flächengebildes und wenigstens einen graphithaltigen Formkörper enthält. Ferner betrifft die vorliegende Erfindung ein Verfahren zur Herstellung eines solchen Schichtverbundwerkstoffes, die Verwendung eines solchen Schichtverbundwerkstoffes, eine Bipolarplatte sowie eine Redox-Flow-Batterie.

Bei einer Redox-Flow-Batterie handelt es sich um eine elektrochemische Zelle, welche aus zwei jeweils mit einem flüssigen Elektrolyten befüllten und voneinander durch eine ionenleitende Membran getrennten Halbzellen, in welchen jeweils eine Elektrode vorgesehen ist, aufgebaut ist. Dabei besteht der Elektrolyt aus in einem Lösungsmittel gelöstem Salz bzw. Salzen, wobei als Lösungsmittel üblicherweise anorganische oder organische Säuren und als Salze bzw. Redoxpaare beispielsweise Titan-, Eisen-, Chrom-, Vanadium-, Cer-, Zink-, Brom- und Schwefelsalze eingesetzt werden.

Dabei sorgt die ionenleitende Membran für einen Ladungsausgleich, verhindert aber gleichzeitig einen Stoffübergang zwischen den beiden Halbzellen. Während bei dem Aufladen der Redox-Flow-Batterie an der in der negativen Halbzelle vorgesehenen Elektrode die Kationen des in dem Elektrolyten gelösten Salzes reduziert werden, werden an der in der positiven Halbzelle vorgesehenen Elektrode die Anionen des in dem Elektrolyten gelösten Salzes oxidiert. Aufgrund dessen fließen während der Aufladung bzw. während dem Speichervorgang Elektronen von der positiven Halbzelle in die negative Halbzelle, wohingegen bei einem Entladevorgang die Elektronen in umgekehrter Richtung fließen.

In derartigen Redox-Flow-Batterien werden als Elektroden üblicherweise Graphitelektroden eingesetzt, weil diese ein großes elektrochemisches Potentialfenster aufweisen. Um eine möglichst hohe spezifische Leistung zu erreichen, werden als Graphitelektroden häufig Graphitfilze mit einer vergleichsweise hohen spezifischen Oberfläche eingesetzt.

Wenn einzelne Redox-Flow-Batterien bzw. Redox-Flow-Zellen miteinander in der Form eines Zellenstapels in Reihe geschaltet werden, werden die einzelnen Zellen typischerweise durch Bipolarplatten voneinander getrennt. Aufgrund der guten Chemikalienbeständigkeit und der hohen elektrischen Leitfähigkeit von Graphit werden für diesen Zweck häufig Graphitplatten bzw. Graphitfolien eingesetzt. Um einen kompakten Aufbau zu erreichen, sind an den beiden gegenüberliegenden Außenflächen der Bipolarplatten jeweils die aus Graphitfilz aufgebauten Elektroden angebracht und mit der Bipolarplatte unter Ausbildung eines Schichtverbundwerkstoffes bzw. Laminats verbunden.

Derartige Schichtverbundwerkstoffe aus einer Bipolarplatte und auf deren beiden Außenflächen aufgebrachten Graphitfilzen müssen eine Reihe von Anforderungen erfüllen. Neben der zuvor bereits genannten guten Chemikalienbeständigkeit und der hohen elektrischen Leitfähigkeit bzw. einen niedrigen elektrischen Widerstand muss sich die Bipolarplatte des Schichtverbundwerkstoffes durch eine hohe Zugfestigkeit sowie durch eine niedrige Permeabilität vor allem für Flüssigkeiten auszeichnen. Hingegen müssen die Graphitfilze eine möglichst hohe Permeabilität für den Elektrolyten aufweisen, um eine große Kontaktfläche zwischen Elektrolyt und Elektrode und dadurch eine hohe Zellenleistung zu erreichen, und, um einen Druckabfall zu vermeiden oder zumindest zu minimieren. Zudem müssen auch die Graphitfilze eine hohe elektrische Leitfähigkeit und eine gute Chemikalienbeständigkeit aufweisen.

Um zwecks Einstellen einer niedrigen Permeabilität der Bipolarplatte für Flüssigkeiten die Dichtigkeit von Graphit zu erhöhen, ist es bereits vorgeschlagen worden, Graphitfolien aus flüssigimprägnierten Graphit herzustellen, also aus Graphit, dessen Poren zumindest teilweise durch Flüssigimprägnierung bzw. Schmelzimprägnierung mit einem geeigneten Imprägniermittel geschlossen worden sind. Als Imprägniermittel werden beispielsweise niedrigviskoser Furfurylalkohol oder lösungsmittelhaltiger Phenolharz eingesetzt. Durch die Imprägnierung kann neben der Dichtigkeit zudem sowohl die Handhabung als auch die Kratzbeständigkeit des Materials verbessert werden.

Ein Nachteil solcher durch Flüssigimprägnierung hergestellter Materialien ist es jedoch, dass das Imprägniermittel, insbesondere in der Tiefenrichtung bzw. z-Richtung des Materials, ungleichmäßig verteilt ist. Während mithin in den Oberflächenbereichen des Materials ein hoher Imprägniergrad und eine vergleichsweise homogene Imprägnierung erreicht werden, weist der zwischen den Oberflächenbereichen liegende innere Bereich des so imprägnierten Materials keinen oder nur einen vergleichsweise niedrigen bzw. ungleichmäßigen Imprägniergrad auf. Dadurch weist eine aus einem solchen Material hergestellte Bipolarplatte zwar in ihren Oberflächenbereichen durch die Oberflächenimprägnierung eine vergleichsweise hohe Impermeabilität für Flüssigkeiten und Gase auf; allerdings ist diese in dem zwischen den Oberflächenbereichen liegenden zentralen Bereich vergleichsweise permeabel, weswegen diese Bipolarplatten beispielsweise für die Verwendung in Redox-Flow-Batterien verbesserungsbedürftig sind.

Ebenfalls bekannt ist die Verwendung von Bipolarplatten, die aus entsprechenden Mischungen mit Graphitanteilen durch Pressverfahren ("mold to size", "press to size") hergestellt werden, beispielsweise mit Polypropylen, Polyvinylidenfluorid und Phenolharz als Additiv. Allerdings weisen solche Bipolarplatten hohe absolute Widerstandswerte und einen in der Summe aus Kontakt- und Übergangswiderstand nachteiligen elektrischen Widerstand auf.

Ein weiterer Nachteil bekannter, in einer Redox-Flow-Batterien eingesetzter Schichtverbundwerkstoffe ist es, dass bei diesen die Haftung und damit der elektrische Kontaktwiderstand zwischen der Bipolarplatte und dem Elektrodenmaterial, also den Graphitfilzen, unzureichend ist. Daher müssen diese bei der Verwendung über eine Rahmenkonstruktion relativ stark miteinander verpresst werden, und zwar üblicherweise um 20 bis 30%. Durch das starke Verpressen wird die Filzstruktur stark komprimiert, so dass der Elektrolyt nicht optimal durch den Filz strömen kann, was insbesondere bei großen Elektrodenflächen zu massiven Druckverlusten und damit zu hohen parasitären Leistungsverlusten in der Batterie führt. Zudem relaxiert das Material wegen des hohen Pressdrucks und aufgrund von minimale Korrosionserscheinungen an Einzelfasern mit der Zeit, weswegen sich mit zunehmender Betriebszeit die Filzschichten von der Bipolarplatte lösen und so der Kontaktwiderstand des Schichtverbundwerkstoffes zunimmt. Durch die zudem schlechte Anpassungsfähigkeit vor allem der Graphit gefüllten Platten muss je nach Einbausituation eine zusätzliche Abdichtung zwischen Rahmen und Bipolarplatte vorgesehen werden, um eine Austreten des Elektrolyten zu verhindern.

Aufgabe der vorliegenden Erfindung ist es daher, einen insbesondere zur Verwendung in einer Redox-Flow-Batterie geeigneten Schichtverbundwerkstoff aus einer Bipolarplatte auf Basis eines graphithaltigen Formkörpers, wie insbesondere einer Graphitfolie, und wenigstens einer daran angebrachten Elektrode aus einem textilen Flächengebilde bereitzustellen, welcher einfach und kostengünstig hergestellt werden kann, bei dem das textilen Flächengebilde dauerhaft fest mit der Bipolarplatte verbunden ist, und bei dem sich die Bipolarplatte nicht nur durch eine hohe Zugfestigkeit und durch eine hohe elektrische Leitfähigkeit auszeichnet, sondern insbesondere auch eine besonders hohe Impermeabilität gegenüber Flüssigkeiten und Gasen sowie eine gute Flexibilität aufweist.

Ein weiterer Nachteil bekannter, in einer Redox-Flow-Batterien eingesetzter Schichtverbundwerkstoffe ist es, dass bei diesen die Haftung und damit der elektrische Kontaktwiderstand zwischen der Bipolarplatte und dem Elektrodenmaterial, also den Graphitfilzen, unzureichend ist. Daher müssen diese bei der Verwendung über eine Rahmenkonstruktion relativ stark miteinander verpresst werden, und zwar üblicherweise um 20 bis 30_%. Durch das starke Verpressen wird die Filzstruktur stark komprimiert, so dass der Elektrolyt nicht optimal durch den Filz strömen kann, was insbesondere bei großen Elektrodenflächen zu massiven Druckverlusten und damit zu hohen parasitären Leistungsverlusten in der Batterie führt. Zudem relaxiert das Material wegen des hohen Pressdrucks und aufgrund von minimale Korrosionserscheinungen an Einzelfasern mit der Zeit, weswegen sich mit zunehmender Betriebszeit die Filzschichten von der Bipolarplatte lösen und so der Kontaktwiderstand des Schichtverbundwerkstoffes zunimmt. Durch die zudem schlechte Anpassungsfähigkeit vor allem der Graphit gefüllten Platten muss je nach Einbausituation eine zusätzliche Abdichtung zwischen Rahmen und Bipolarplatte vorgesehen werden, um eine Austreten des Elektrolyten zu verhindern.

In der DE 102007037435 wird ein Schichtstoff beschrieben, der aus mindestens einer Lage eines graphitgefüllten Polymermaterials oder einer Lage eines keramischen Materials besteht und bei dem eine unlösbare Verbindung zwischen den Materialien durch Verwendung einer grenzflächenaktiven haftvermittelnden Sudstanz vorliegt. Dieser Schichtstoff kann als Komponente in Redox-Flow-Batterien verwendet werden.

Aufgabe der vorliegenden Erfindung ist es daher, einen insbesondere zur Verwendung in einer Redox-Flow-Batterie geeigneten Schichtverbundwerkstoff aus einer Bipolarplatte auf Basis eines graphithaltigen Formkörpers, wie insbesondere einer Graphitfolie, und wenigstens einer daran angebrachten Elektrode aus einem textilen Flächengebilde bereitzustellen, welcher einfach und kostengünstig herge-Erfindungsgemäß wird diese Aufgabe durch die Bereitstellung eines Schichtverbundwerkstoffes insbesondere zur Verwendung in einer Redox-Flow-Batterie gelöst, wobei der Schichtverbundwerkstoff wenigstens eine Lage eines textilen Flächengebildes und wenigstens einen graphithaltigen Formkörper enthält, wobei der graphithaltige Formkörper durch ein Verfahren erhältlich ist, bei dem Graphitpartikel mit wenigstens einem festen organischen Additiv zu einer Mischung vermischt werden und die so erhaltene Mischung anschließend verdichtet wird.

Diese Lösung basiert auf der überraschenden Erkenntnis, dass in einem solchen Schichtverbundwerkstoff der als Bipolarplatte fungierende Formkörper auf Basis von Graphit nicht nur einen hohen Füllgrad an Poren verschließendem Additiv aufweist, sondern dass das Poren verschließende organische Additiv zudem über alle drei Dimensionen und insbesondere in der Tiefenrichtung des Formkörpers, also in der z-Richtung des Formkörpers, homogen verteilt ist. Aus diesem Grund weist der Formkörper in allen drei Dimensionen und insbesondere auch in der senkrechten Ebene des Formkörpers, also in der senkrecht zu der x-y-Richtung bzw. der Ebene, in welcher der Formkörper seine längste Ausdehnung besitzt, homogene Eigenschaften auf und zeichnet sich durch eine hohe Festigkeit in der z-Richtung und insbesondere auch durch eine hohe elektrische Leitfähigkeit, eine hohe Zugfestigkeit, eine hohe Wärmeleitfähigkeit, eine hohe Temperaturbeständigkeit, eine gute Chemikalienbeständigkeit, eine hohe Impermeabilität gegenüber Flüssigkeiten sowie durch eine hohe Stabilität aus, und zwar insbesondere auch bei einer geringen Flächenpressung des Formkörpers. Aufgrund der homogenen Verteilung des organischen Additivs bzw. der organischen Additive über alle drei Dimensionen wird nämlich insbesondere erreicht, dass das Additiv nicht nur in den oberflächennahen Bereichen des Formkörpers vorliegt, sondern insbesondere auch in dem zwischen den oberflächennahen Bereichen befindlichen inneren bzw. zentralen Bereich des Formkörpers. Dadurch wird es verhindert, dass der Formkörper nur in seinen Oberflächenbereichen eine hohe Impermeabilität aufweist, aber in dem Inneren des Formkörpers Gase oder Flüssigkeiten diffundieren köntextilen Flächengebilde bereitzustellen, welcher einfach und kostengünstig hergestellt werden kann, bei dem das textilen Flächengebilde dauerhaft fest mit der Bipolarplatte verbunden ist, und bei dem sich die Bipolarplatte nicht nur durch eine hohe Zugfestigkeit und durch eine hohe elektrische Leitfähigkeit auszeichnet, sondern insbesondere auch eine besonders hohe Impermeabilität gegenüber Flüssigkeiten und Gasen sowie eine gute Flexibilität aufweist.

Erfindungsgemäß wird diese Aufgabe durch die Bereitstellung eines Schichtverbundwerkstoffes insbesondere zur Verwendung in einer Redox-Flow-Batterie gelöst, wobei der Schichtverbundwerkstoff wenigstens eine Lage eines textilen Flächengebildes und wenigstens einen graphithaltigen Formkörper enthält, wobei der graphithaltige Formkörper durch ein Verfahren erhältlich ist, bei dem Graphitpartikel mit wenigstens einem festen organischen Additiv zu einer Mischung vermischt werden und die so erhaltene Mischung anschließend verdichtet wird, wobei das wenigstens eine feste Additiv und die daraus hergestellte Mischung vor dem Verdichten nicht geschmolzen und nicht gesintert werden.

Diese Lösung basiert auf der überraschenden Erkenntnis, dass in einem solchen Schichtverbundwerkstoff der als Bipolarplatte fungierende Formkörper auf Basis von Graphit nicht nur einen hohen Füllgrad an Poren verschließendem Additiv aufweist, sondern dass das Poren verschließende organische Additiv zudem über alle drei Dimensionen und insbesondere in der Tiefenrichtung des Formkörpers, also in der z-Richtung des Formkörpers, homogen verteilt ist. Aus diesem Grund weist der Formkörper in allen drei Dimensionen und insbesondere auch in der senkrechten Ebene des Formkörpers, also in der senkrecht zu der x-y-Richtung bzw. der Ebene, in welcher der Formkörper seine längste Ausdehnung besitzt, homogene Eigenschaften auf und zeichnet sich durch eine hohe Festigkeit in der z-Richtung und insbesondere auch durch eine hohe elektrische Leitfähigkeit, eine hohe Zugfestigkeit, eine hohe Wärmeleitfähigkeit, eine hohe Temperaturbeständigkeit, eine gute Chemikalienbeständigkeit, eine hohe Impermeabilität gegenüber nen. Vielmehr wird durch die homogene Additivverteilung auch in dem Inneren des Formkörpers eine hohe Impermeabilität in allen Dimensionen erreicht. Aufgrund des niedrigen elektrischen Widerstandes des Formkörpers weist insbesondere auch der gesamte Schichtverbundwerkstoff einen niedrigen spezifischen elektrischen Widerstand auf.

Ein weiterer wesentlicher Vorteil des erfindungsgemäßen Schichtverbundwerkstoffes ist es, dass der darin enthaltende Formkörper aufgrund seiner hohen Impermeabilität vor allem gegenüber Flüssigkeiten insbesondere für die Verwendung in einer Redox-Flow-Batterie dünner ausgestaltet werden kann, als dies bei den aus dem Stand der Technik bekannten Bipolarplatten möglich ist. Dadurch kann der Schichtverbundwerkstoff und die gesamte Redox-Flow-Batterie bei gleicher Leistung kompakter ausgestaltet werden.

Im weiteren besondere Vorteil gegenüber den aus dem Stand der Technik bekannten Formkörpern ist der in dem erfindungsgemäßen Schichtverbundwerkstoff enthaltene graphithaltige Formkörper schnell, einfach und kostengünstig herstellbar, und zwar insbesondere auch durch ein kontinuierliches Verfahren, bei dem beispielsweise einem Graphitpartikeln enthaltendem Gasstrom kontinuierlich ein festes und vorzugsweise trockenes organisches Additiv beispielsweise über eine Förderschnecke zugegeben und damit vermischt wird und diese Mischung dann kontinuierlich durch eine Walze geführt wird, in welcher die Mischung verdichtet wird.

Ein weiterer wesentlicher Vorteil des erfindungsgemäßen Schichtverbundwerkstoffes ist es, dass durch das in dem graphithaltige Formkörper enthaltene organische Additiv beispielsweise durch thermische Verbindung oder mittels eines Klebstoffes eine besonders feste Verbindung des Formkörpers mit der wenigstens einen Lage des textilen Flächengebildes erreicht werden kann. Insbesondere erlaubt das organische Additiv ein direktes Verschweißen des mit organischem Additiv gefüllten Formkörpers mit dem textilen Flächengebilde, wenn bei dem Aufschmelzen oder Sintern des organischen Additives das textile Flächengebilde mit wenig Anpressdruck mit dem Formkörper verpresst wird. Daher muss der erfindungsgemäße Schichtverbundwerkstoff während dessen Verwendung durch eine Rahmenkonstruktion sehr viel weniger stark verpresst werden, so dass das textile Flächengebilde nicht so stark komprimiert wird. Aus diesem Grund kann der Elektrolyt bei dem erfindungsgemäßen Schichtverbundwerkstoff besser durch das textile Flächengebilde strömen, wodurch bei dessen Einsatz in einer Redox-Flow-Batterie die Batterieeffizienz gesteigert werden kann. Zudem weist der erfindungsgemäße Schichtverbundwerkstoff aufgrund dessen auch eine höhere Lebensdauer auf, weil sich das textile Flächengebilde nicht so leicht von dem Formkörper löst und so der Kontaktwiderstand des Schichtverbundwerkstoffes auch über lange Betriebszeiten hinweg niedrig bleibt.

Wie dargelegt, wird der in dem erfindungsgemäßen Schichtverbundwerkstoff enthaltene Formkörper durch ein Verfahren erhalten, bei dem Graphitpartikel zunächst mit wenigstens einem festen organischen Additiv zu einer Mischung vermischt werden, bevor die so erhaltene Mischung anschließend verdichtet wird. Darunter wird im Rahmen der vorliegenden Patentanmeldung verstanden, dass im Gegensatz zu einer Flüssig- bzw. Schmelzimprägnierung bis zu der Verdichtung der Mischung weder die Graphitpartikel noch das Additiv noch die Graphitpartikel und Additiv enthaltende Mischung geschmolzen oder gesintert werden.

Grundsätzlich können als Graphitausgangsmaterial für den in dem erfindungsgemäßen Schichtverbundwerkstoff enthaltenen Formkörper Partikel auf Basis aller bekannten Graphite eingesetzt werden, also beispielsweise Partikel aus Naturgraphit oder aus synthetischem Graphit.

Allerdings wird es gemäß einer besonders bevorzugten Ausführungsform der vorliegenden Erfindung vorgeschlagen, als Graphitpartikel Partikel aus expandiertem Graphit einzusetzen. Unter expandiertem Graphit wird Graphit verstanden, der im Vergleich zu natürlichem Graphit in der Ebene senkrecht zu den hexagonalen Kohlenstoffschichten beispielsweise um den Faktor 80 oder mehr expandiert ist. Aufgrund dieser Expansion zeichnet sich expandierter Graphit durch eine hervorragende Formbarkeit und eine gute Verzahnbarkeit aus, weswegen dieser zur Herstellung des in dem erfindungsgemäßen Schichtverbundwerkstoff enthaltenen Formkörpers besonders geeignet ist. Aufgrund seiner ebenfalls hohen Porosität lässt sich expandierter Graphit zudem sehr gut mit Partikeln aus organischem Additiv mit einem entsprechend kleinen Partikeldurchmesser vermischen und aufgrund des Expansionsgrades leicht verdichten bzw. kompaktieren. Zur Herstellung von expandiertem Graphit mit einer wurmförmigen Struktur wird üblicherweise Graphit, wie Naturgraphit, mit einer Interkalationsverbindung, wie beispielsweise Salpetersäure oder Schwefelsäure, vermischt und bei einer erhöhten Temperatur von beispielsweise 600 bis 1200 °C wärmebehandelt.

Vorzugsweise wird expandierter Graphit eingesetzt, welcher aus Naturgraphit mit einem gemäß dem in der DIN 66165 spezifizierten Messverfahren und Siebsatz bestimmten mittleren Partikeldurchmesser (d₅₀) von wenigstens 149 µm und bevorzugt von wenigstens 180 µm hergestellt worden ist.

Besonders gute Ergebnisse werden bei dieser Ausführungsform insbesondere mit Partikeln aus expandiertem Graphit erhalten, welcher einen Expansionsgrad von 10 bis 1.400, vorzugsweise von 20 bis 700 und besonders bevorzugt von 60 bis 100 aufweist.

Dies entspricht im Wesentlichen expandiertem Graphit mit einem Schüttgewicht von 0,5 bis 95 g/l, vorzugsweise von 1 bis 25 g/l und besonders bevorzugt von 2 bis 10 g/l.

In Weiterbildung des Erfindungsgedankens wird es vorgeschlagen, Graphitpartikel und insbesondere Partikel aus expandiertem Graphit mit einem mittleren Partikeldurchmesser (d₅₀) von 150 bis 3.500 µm, vorzugsweise von 250 bis 2.000 µm und besonders bevorzugt von 500 bis 1.500 µm einzusetzen. Diese Graphitpartikel lassen sich besonders gut mit partikelförmigen organischen Additiven vermischen und verdichten. Dabei wird der mittlere Durchmesser (d₅₀) der Graphitpartikel gemäß dem in der DIN 66165 spezifizierten Messverfahren und Siebsatz bestimmt.

Vorzugsweise enthält die zu verdichtende Mischung 50 bis 99 Gew.-%, bevorzugt 70 bis 97 Gew.-% und besonders bevorzugt 75 bis 95 Gew.-% Graphitpartikel und bevorzugt entsprechende Partikel aus expandiertem Graphit.

Gemäß einer besonders bevorzugten Ausführungsform der vorliegenden Erfindung weist der in dem erfindungsgemäßen Schichtverbundwerkstoff enthaltene Formkörper bei einer Flächenpressung von 20 MPa mit Helium als Gas (1 bar Helium Prüfgassinnendruck) in einer Messapparatur in Anlehnung an die DIN 28090-1 bei Raumtemperatur gemessene Impermeabilität senkrecht zu seiner Längsebene von weniger als 10⁻¹ mg/(s·m²), bevorzugt von weniger als 10⁻² mg/(s·m²) und besonders bevorzugt von weniger als 10⁻³ mg/(s·m²) auf.

Aufgrund des Zusatzes an organischem Additiv ist es leicht möglich, den in dem erfindungsgemäßen Schichtverbundwerkstoff enthaltenen graphithaltigen Formkörper so vorzusehen, dass dieser eine gemäß der DIN ISO 1924-2 gemessene Zugfestigkeit von 10 bis 35 MPa und bevorzugt von 15 bis 25 MPa aufweist.

In Weiterbildung des Erfindungsgedankens wird es vorgeschlagen, in dem erfindungsgemäßen Schichtverbundwerkstoff einen graphithaltigen Formkörper mit einem gemäß der DIN 51911 mit einer Auflast von 50 N bei einer Fläche von 50 mm senkrecht zu seiner Längsebene gemessenen spezifischen elektrischen Widerstand von weniger als 20 Ω·mm und bevorzugt von weniger als 15 Ω·mm vorzusehen.

Gemäß einer weiteren besonders bevorzugten Ausführungsform der vorliegenden Erfindung enthält die zu verdichtende Mischung bzw. der graphithaltige Formkörper in dem erfindungsgemäßen Schichtverbundwerkstoff 1 bis 50 Gew.-%, bevorzugt 3 bis 30 Gew.-% und besonders bevorzugt 5 bis 25 Gew.-% eines oder mehrerer organischer Additive. Dadurch werden besonders gute Ergebnisse insbesondere im Hinblick auf eine gewünschte Impermeabilität, aber auch im Hinblick auf eine hohe Zugfestigkeit und mechanische Stabilität erreicht. Zudem wird so ein Formkörper mit einer sehr hohen Zugfestigkeit und mit einer hohen Impermeabilität insbesondere in der z-Richtung des Formkörpers erhalten. Abgesehen davon erleichtert der Zusatz des organischen Additivs die Formgebung und führt zu einer besseren Verschweißbarkeit des Formkörpers mit einem weiteren graphithaltigen Formkörper wie in dem erfindungsgemäßen Schichtverbundwerkstoff, mit Metallfolie oder Graphitfolie und damit zu einer festeren Verbindbarkeit mit dem textilen Flächengebilde. Zudem wird dadurch eine höhere Querfestigkeit als bei dem Zusatz geringerer Mengen organischem Additiv erreicht.

Grundsätzlich kann der Formkörper bei dieser Ausführungsform neben dem Graphit und dem organischen Additiv noch Füllstoffe enthalten, was jedoch nicht erforderlich und auch nicht bevorzugt ist. Daher besteht der erfindungsgemäße Formkörper gemäß dieser Ausführungsform bevorzugt aus der vorgenannte Menge organischem Additiv und Rest Graphit.

Grundsätzlich kann als organisches Additiv jedes beliebige organische Material eingesetzt werden. Gute Ergebnisse werden insbesondere erhalten, wenn das organische Additiv ein Polymer ausgewählt aus der Gruppe bestehend aus Thermoplasten, Duroplasten, Elastomeren und beliebigen Mischungen hiervon ist. Mit solchen Materialien wird insbesondere bei vergleichsweise niedrigen Temperaturen von beispielsweise -100 °C bis 300 °C eine hohe Impermeabilität des Formkörpers für flüssige und gasförmige Substanzen erreicht.

Beispiele für entsprechende Polymere sind Siliconharze, Polyolefine, Epoxidharze, Phenolharze, Melaminharze, Harnstoffharze, Polyesterharze, Polyetheretherketone, Benzoxazine, Polyurethane, Nitrilkautschuke, wie Acrylnitril-Butadien-Styrol-Kautschuk, Polyamide, Polyimide, Polysulfone, Polyvinylchlorid und Fluorpolymere, wie Polyvinylidenfluorid, Ethylen-Tetrafluorethylen-Copolymere und Polytetrafluorethylen und beliebige Mischungen oder Copolymere von zwei oder mehr der vorgenannten Verbindungen.

Gemäß einer besonders bevorzugten Variante dieser Ausführungsform ist das organische Additiv bzw. sind die organischen Additive aus der Gruppe ausgewählt, welche aus Polyethylen, Polypropylen, Ethylen-Tetrafluorethylen-Copolymeren, Polyvinylidenfluorid, Polytetrafluorethylen und beliebigen Mischungen von zwei oder mehr der vorgenannten Verbindungen besteht. Dies hat sich im Rahmen der vorliegenden Erfindung überraschenderweise für die Ausgewogenheit aller erforderlicher Eigenschaften, wie hohe Zugfestigkeit, hohe elektrische Leitfähigkeit, gute Verbindbarkeit mit textilen Flächengebilde auf Basis von Graphit, hohe Wärmeleitfähigkeit, hohe Temperaturbeständigkeit, gute Chemikalienbeständigkeit und hohe Impermeabilität gegenüber Flüssigkeiten und Gasen, als besonders vorteilhaft erwiesen.

In Weiterbildung des Erfindungsgedankens wird es vorgeschlagen, in dem Formkörper des erfindungsgemäßen Schichtverbundwerkstoffes als organisches Additiv Polyvinylidenfluorid vorzusehen. Aufgrund seiner Dünnflüssigkeit ist Polyvinylidenfluorid bei dem Schmelz-/Sinterprozess besonders vorteilhaft und führt zu einer besonders guten Verschweißbarkeit mit dem textilen Flächengebilde.

Folglich wird das organische Additiv hinsichtlich seiner chemischen Natur und eingesetzten Menge bevorzugt so ausgewählt, dass der Formkörper in einem Temperaturbereich zwischen -100 und 300 °C und insbesondere in einem Temperaturbereich zwischen -20 und 250 °C impermeabel ist, wobei unter impermeabel im Sinne der vorliegenden Erfindung verstanden wird, dass der Formkörper bei einer Flächenpressung von 20 MPa mit Helium als Gas (1 bar Helium Prüfgassinnendruck) in einer Messapparatur in Anlehnung an die DIN 28090-1 bei Raumtemperatur gemessene Impermeabilität senkrecht zu seiner Längsebene von weniger als 10⁻¹ mg/(s·m²), bevorzugt von weniger als 10⁻² mg/(s·m²) und besonders bevorzugt von weniger als 10⁻³ mg/(s·m²) aufweist.

Gemäß einer ersten ganz besonders bevorzugten Ausführungsform der vorliegenden Erfindung enthält die zu verdichtende Mischung bzw. der in dem erfindungsgemäßen Schichtverbundwerkstoff vorgesehene Formkörper 5 bis 50 Gew.-% Polyethylenpartikel als organisches Additiv. Dadurch werden Schichtverbundwerkstoffe erhalten, welche die vorgenannten Eigenschaften, insbesondere niedrigen Kontaktwiderstand und hohe Impermeabilität des Formkörpers bzw. der Bipolarplatte, besonders ausgewogen aufweisen. Gute Ergebnisse werden bei dieser Ausführungsform insbesondere erhalten, wenn die zu verdichtende Mischung bzw. der in dem erfindungsgemäßen Schichtverbundwerkstoff vorgesehene Formkörper 10 bis 30 Gew.-%, besonders bevorzugt 15 bis 25 Gew.-%, ganz besonders bevorzugt 18 bis 22 Gew.-% und höchst bevorzugt 20 Gew.-% Polyethylenpartikel enthält. Zwar kann der Formkörper neben dem Polyethylen und dem Graphit noch Füllstoffe enthalten, was jedoch nicht erforderlich und auch nicht bevorzugt ist. Daher besteht der erfindungsgemäße Formkörper gemäß dieser Ausführungsform bevorzugt aus der vorgenannte Menge Polyethylen und Rest expandierter Graphit.

Gemäß einer zweiten ganz besonders bevorzugten Ausführungsform der vorliegenden Erfindung enthält die zu verdichtende Mischung bzw. der in dem erfindungsgemäßen Schichtverbundwerkstoff vorgesehene Formkörper 5 bis 50 Gew.-% Polypropylenpartikel als organisches Additiv. Auch dadurch werden Schichtverbundwerkstoffe erhalten, welche die vorgenannten Eigenschaften, insbesondere niedrigen Kontaktwiderstand und hohe Impermeabilität des Formkörpers bzw. der Bipolarplatte, besonders ausgewogen aufweisen. Gute Ergebnisse werden bei dieser Ausführungsform insbesondere erhalten, wenn die zu verdichtende Mischung bzw. der in dem erfindungsgemäßen Schichtverbundwerkstoff vorgesehene Formkörper 5 bis 40 Gew.-%, bevorzugt 10 bis 30 Gew.-%, besonders bevorzugt 15 bis 25 Gew.-%, ganz besonders bevorzugt 18 bis 22 Gew.-% und höchst bevorzugt 20 Gew.-% Polypropylenpartikel enthält. Zwar kann der Formkörper neben dem Polypropylen und dem Graphit noch Füllstoffe enthalten, was jedoch nicht erforderlich und auch nicht bevorzugt ist. Daher besteht der erfindungsgemäße Formkörper gemäß dieser Ausführungsform bevorzugt aus der vorgenannte Menge Polypropylen und Rest expandierter Graphit.

Gemäß einer dritten ganz besonders bevorzugten Ausführungsform der vorliegenden Erfindung enthält die zu verdichtende Mischung bzw. der in dem erfindungsgemäßen Schichtverbundwerkstoff vorgesehene Formkörper 0,5 bis 30 Gew.-% Partikel aus einem Ethylen-Tetrafluorethylen-Copolymer. Auch dadurch werden überraschenderweise Schichtverbundwerkstoffe mit den vorgenannten Eigenschaften erhalten. Gute Ergebnisse werden bei dieser Ausführungsform insbesondere erhalten, wenn die zu verdichtende Mischung bzw. der in dem erfindungsgemäßen Schichtverbundwerkstoff vorgesehene Formkörper 1 bis 20 Gew.-%, besonders bevorzugt 3 bis 10 Gew.-%, ganz besonders bevorzugt 5 bis 8 Gew.-% und höchst bevorzugt 6 Gew.-% Partikel aus einem Ethylen-Tetrafluorethylen-Copolymer enthält. Zwar kann der Formkörper neben dem Ethylen-Tetrafluorethylen-Copolymer und dem Graphit noch Füllstoffe enthalten, was jedoch nicht erforderlich und auch nicht bevorzugt ist. Daher besteht der erfindungsgemäße Formkörper gemäß dieser Ausführungsform bevorzugt aus der vorgenannte Menge Ethylen-Tetrafluorethylen-Copolymer und Rest expandierter Graphit.

Gemäß einer vierten ganz besonders bevorzugten Ausführungsform der vorliegenden Erfindung enthält die zu verdichtende Mischung bzw. der in dem erfindungsgemäßen Schichtverbundwerkstoff vorgesehene Formkörper 0,5 bis 50 Gew.-% Partikel aus Polyvinylidenfluorid. Auch dadurch werden überraschenderweise Schichtverbundwerkstoffe mit den vorgenannten Eigenschaften erhalten. Gute Ergebnisse werden bei dieser Ausführungsform insbesondere erhalten, wenn die zu verdichtende Mischung bzw. der in dem erfindungsgemäßen Schichtverbundwerkstoff vorgesehene Formkörper 2 bis 30 Gew.-%, besonders bevorzugt 5 bis 20 Gew.-%, ganz besonders bevorzugt 8 bis 12 Gew.-% und höchst bevorzugt 10 Gew.-% Partikel aus Polyvinylidenfluorid enthält. Zwar kann der Formkörper neben dem Polyvinylidenfluorid und dem Graphit noch Füllstoffe enthalten, was jedoch nicht erforderlich und auch nicht bevorzugt ist. Daher besteht der erfindungsgemäße Formkörper gemäß dieser Ausführungsform bevorzugt aus der vorgenannte Menge Polyvinylidenfluorid und Rest expandierter Graphit.

In Weiterbildung des Erfindungsgedankens wird es vorgeschlagen, dass das organische Additiv bzw. die organischen Additive in der zu verdichtenden Mischung einen gemäß der ISO 13320 bestimmten mittleren Partikeldurchmesser (d₅₀) von 1 bis 500 µm, vorzugsweise von 1 bis 150 µm, besonders bevorzugt von 2 bis 30 µm und ganz besonders bevorzugt von 3 bis 15 µm aufweisen.

Ferner ist es bevorzugt, dass der in dem erfindungsgemäßen Schichtverbundwerkstoff vorgesehene graphithaltige Formkörper eine Dichte von wenigstens 1,0 g/cm³, bevorzugt eine Dichte von 1,2 bis 1,8 g/cm³ und besonders bevorzugt eine Dichte von 1,4 bis 1,7 g/cm³ aufweist. Dadurch können besonders kompakte Schichtverbundwerkstoffe hergestellt werden.

Aus dem gleichen Grund ist es bevorzugt, dass der wenigstens eine in dem erfindungsgemäßen Schichtverbundwerkstoff vorgesehene graphithaltige Formkörper eine Dicke von 0,02 bis 3 mm, bevorzugt von 0,2 bis 1,0 mm und besonders bevorzugt von 0,5 bis 0,8 mm aufweist. Dabei ist der graphithaltige Formkörpers vorzugsweise als Folie oder Platte ausgebildet. Dickere Platten können beispielsweise durch Verpressen, Verkleben, Verschweißen, Heißkleben von zwei einzelnen Formkörpern hergestellt werden. Dies ist mit oder ohne Druck und durch Verwendung von Klebstoffen, Haftvermittlern oder durch das in dem Formkörper vorliegende Additiv möglich. Dabei ist die direkte Verschweißbarkeit zweier Formkörper besonders bevorzugt.

Gemäß einer weiteren bevorzugten Ausführungsform ist der in dem erfindungsgemäßen Schichtverbundwerkstoff vorgesehene Formkörper zumindest im Wesentlichen flächig ausgebildet, und zwar besonders bevorzugt als Platte oder Folie.

Grundsätzlich kann die wenigstens eine Lage des textilen Flächengebildes jede beliebige textile Struktur aufweisen. Beispielsweise kann es sich bei dem textilen Flächengebilde um eine aus der aus Geweben, Gewirken, Gestricken, Papieren, Gelegen, Vliesen, Filzen und beliebigen Kombinationen von zwei oder mehr der vorgenannten Strukturen bestehenden Gruppe ausgewählte Struktur handeln.

In Weiterbildung des Erfindungsgedankens wird es vorgeschlagen, die wenigstens eine Lage des textilen Flächengebildes aus Filz mit einer Dicke von 1 bis 20 mm, bevorzugt von 1 bis 10 mm und besonders bevorzugt von 2 bis 5 mm vorzusehen. Derartige textile Flächengebilde eignen sich als Elektrodenmaterial für eine Redox-Flow-Batterie besonders gut. Insbesondere auch bei dieser Ausführungsform ist es zudem bevorzugt, wenn der erfindungsgemäße Schichtverbundwerkstoff zwei Lagen aus textilem Flächengebilde, besonders bevorzugt Filz, aufweist, welche auf den beiden Außenflächen des graphithaltigen Formkörpers angebracht sind.

Grundsätzlich kann das textile Flächengebilde, bevorzugt Filz, aus jedem für die Verwendung als Elektrode in einer Redox-Flow-Batterie geeigneten Material hergestellt sein. Lediglich beispielsweise werden in diesem Zusammenhang textile Flächengebilde, bevorzugt Filze, aus Kohlenstoff- oder Graphitfasern, beispielsweise auf Basis von Cellulose, Polyacrylnitril oder Pech als Precursor, genannt. Die textilen Flächengebilde können aber auch aus anderen elektrisch gut leitfähigen Materialien hergestellt sein, wie etwa Metallfasern.

Gemäß einer weiteren bevorzugten Ausführungsform der vorliegenden Erfindung weisen die Fasern des textilen Flächengebildes eine Dichte von 1,2 bis 2,0 g/cm³ und besonders bevorzugt von 1,4 bis 1,9 g/cm³ auf. Solche Fasern weisen eine geeignete Festigkeit auf.

Gute Ergebnisse bei der Verwendung in einer Redox-Flow-Batterie werden insbesondere auch erhalten, wenn die das textile Flächengebilde und bevorzugt den Filz ausbildenden Fasern einen Durchmesser von 5 bis 20 µm und besonders bevorzugt von 5 bis 10 µm aufweisen.

Um eine gute Durchströmung des textilen Flächengebildes mit in Redox-Flow-Batterien üblicherweise eingesetzten Elektrolyten zu erreichen, wird es in Weiterbildung des Erfindungsgedankens vorgeschlagen, dass das textile Flächengebilde, bevorzugt der Filz, eine Dichte von 0,001 bis 0,5 g/cm³, bevorzugt eine Dichte von 0,01 bis 0,2 g/cm³ und ganz besonders bevorzugt eine Dichte von 0,08 bis 0,12 g/cm³ aufweist.

Aus dem gleichen Grund ist es alternativ oder zusätzlich zu der vorgenannten Ausführungsform bevorzugt, dass das textile Flächengebilde, bevorzugt der Filz, eine möglichst hohe spezifische BET-Oberfläche aufweist. Gute Ergebnisse werden beispielsweise erhalten, wenn das textile Flächengebilde, bevorzugt der Filz, eine spezifische BET-Oberfläche von 0,05 bis 300 m²/g und bevorzugt von 0,1 bis 250 m²/g aufweist.

Um eine für die Verwendung als Elektrode in Redox-Flow-Batterien ausreichend hohe elektrische Leitfähigkeit zu erreichen, weist das textile Flächengebilde, bevorzugt Filz, einen gemäß der DIN 51911 bei 20 °C und senkrecht zu seiner Längsebene gemessenen spezifischen elektrischen Widerstand von 1 bis 15 Ω·mm und bevorzugt von 3 bis 4 Ω·mm oder 10 bis 12 Ω·mm auf.

Aus dem gleichen Grund ist es bevorzugt, dass das textile Flächengebilde, bevorzugt Filz, einen gemäß der DIN 51911 bei 20 °C und parallel zu seiner Längsebene gemessenen spezifischen elektrischen Widerstand von 0,5 bis 3 Ω·mm und bevorzugt von 1 bis 2 Ω·mm aufweist.

In dem erfindungsgemäßen Schichtverbundwerkstoff kann der graphithaltige Formkörper mit dem oder den textilen Flächengebilde(n) direkt, beispielsweise thermisch, oder indirekt, beispielsweise mittels eines Klebstoffes, miteinander verbunden sein.

Zur thermischen Verbindung, welche durch das in dem Formkörper vorliegende organische Additiv erleichtert wird, können beispielsweise die einzelnen Lagen an ihren Verbindungsflächen aufgeschmolzen und gesintert werden. Dies kann in Anwesenheit oder Abwesenheit von Druck erfolgen.

Alternativ dazu kann die Verbindung zwischen dem graphithaltigen Formkörper und dem oder den textilen Flächengebilde(n) durch Verwenden von Klebstoff und/oder Haftvermittler erfolgen. Hierzu eignet sich grundsätzlich jeder Klebstoff, mit dem zwei graphithaltige Schichten miteinander verklebt werden können. Gute Ergebnisse werden diesbezüglich insbesondere erzielt, wenn als Klebstoff ein Pech, ein Phenolharz, ein Furanharz oder eine Mischung aus zwei oder mehr der vorgenannten Verbindungen eingesetzt wird, wie beispielsweise ein Klebstoff auf Basis von graphitgefülltem Phenolharz oder auf Basis von Wasserglas. Aufgrund des in dem Formkörper enthaltenden organischen Additivs lässt sich dieser mit dem bzw. den Lagen aus textilem Flächengebilde, bevorzugt Filzlagen, besonders fest verbinden, so dass bei der Verwendung des Schichtverbundwerkstoffes beispielsweise in einer Redox-Flow-Batterie eine geringere Verpressung beispielsweise durch einen Rahmen erfolgen muss, so dass eine bessere Durchströmung des Filzes mit Elektrolyt und somit eine bessere Batterieeffizienz erreicht wird.

Um einen geringen Kontaktwiderstand zu erreichen, wird es in Weiterbildung des Erfindungsgedankens vorgeschlagen, einen elektrisch leitfähigen Klebstoff einzusetzen. Hierzu kann der Klebstoff, insbesondere Pech, Phenolharz oder Furanharz, mit geeigneten Mengen an Metallpartikeln, insbesondere Silberpartikeln oder Nickelpartikeln, Kohlenstoffpartikeln oder Graphitpartikeln als Füllstoff versetzt werden.

Ein weiterer Gegenstand der vorliegenden Erfindung ist eine Redox-Flow-Batterie, welche wenigstens einen zuvor beschriebenen Schichtverbundwerkstoff, einen Elektrolyten und eine Membran enthält. Dabei kann es sich insbesondere auch um einen Stapel mehrerer aneinander angrenzender und jeweils durch einen zuvor beschriebenen Schichtverbundwerkstoff verbundener Redox-Flow-Batterien bzw. Redox-Flow-Zellen handeln.

Zudem betrifft die vorliegende Erfindung eine Bipolarplatte, welche insbesondere zur Verwendung in einer Redox-Flow-Batterie geeignet ist, wobei die Bipolarplatte durch ein Verfahren erhältlich ist, bei dem Graphitpartikel mit wenigstens einem festen organischen Additiv zu einer Mischung vermischt werden und die so erhaltene Mischung anschließend verdichtet wird.

Gemäß einer ersten besonders bevorzugten Ausführungsform der vorliegenden Erfindung enthält die zu verdichtende Mischung 5 bis 50 Gew.-%, bevorzugt 10 bis 30 Gew.-%, besonders bevorzugt 15 bis 25 Gew.-%, ganz besonders bevorzugt 18 bis 22 Gew.-% und höchst bevorzugt etwa 20 Gew.-% Polyethylenpartikel. Zwar kann der Formkörper neben dem Polyethylen und dem Graphit noch Füllstoffe enthalten, was jedoch nicht erforderlich und auch nicht bevorzugt ist. Daher besteht der erfindungsgemäße Formkörper gemäß dieser Ausführungsform bevorzugt aus der vorgenannte Menge Polyethylen und Rest expandierter Graphit. Bei dieser Ausführungsform können insbesondere Formkörper mit einem spezifischen elektrischen Widerstand senkrecht zu der Längsebene des Formkörpers von weniger als 15 Ohm·mm, mit einer Zugfestigkeit von 20 bis 25 MPa und mit einer Impermeabilität von weniger als 1·10⁻³ mg/(s·m²) erhalten werden.

Zudem enthält die zu verdichtende Mischung gemäß einer zweiten besonders bevorzugten Ausführungsform der vorliegenden Erfindung 5 bis 50 Gew.-%, bevorzugt 10 bis 30 Gew.-%, besonders bevorzugt 15 bis 25 Gew.-%, ganz besonders bevorzugt 18 bis 22 Gew.-% und höchst bevorzugt etwa 20 Gew.-% Polypropylenpartikel. Zwar kann der Formkörper neben dem Polypropylen und dem Graphit noch Füllstoffe enthalten, was jedoch nicht erforderlich und auch nicht bevorzugt ist. Daher besteht der erfindungsgemäße Formkörper gemäß dieser Ausführungsform bevorzugt aus der vorgenannte Menge Polypropylen und Rest expandierter Graphit. Bei dieser Ausführungsform können insbesondere Formkörper mit einem spezifischen elektrischen Widerstand senkrecht zu der Längsebene des Formkörpers von weniger als 15 Ohm·mm, mit einer Zugfestigkeit von 20 bis 25 MPa und mit einer Impermeabilität von weniger als 1·10⁻³ mg/(s·m²) erhalten werden.

Gemäß einer dritten besonders bevorzugten Ausführungsform der vorliegenden Erfindung enthält die zu verdichtende Mischung 0,5 bis 30 Gew.-%, bevorzugt 1 bis 20 Gew.-%, besonders bevorzugt 3 bis 10 Gew.-%, ganz besonders bevorzugt 5 bis 8 Gew.-% und höchst bevorzugt etwa 6 Gew.-% Partikel aus einem Ethylen-Tetrafluorethylen-Copolymer. Zwar kann der Formkörper neben dem Ethylen-Tetrafluorethylen-Copolymer und dem Graphit noch Füllstoffe enthalten, was jedoch nicht erforderlich und auch nicht bevorzugt ist. Daher besteht der erfindungsgemäße Formkörper gemäß dieser Ausführungsform bevorzugt aus der vorgenannte Menge Ethylen-Tetrafluorethylen-Copolymer und Rest expandierter Graphit. Bei dieser Ausführungsform können insbesondere Formkörper mit einem spezifischen elektrischen Widerstand senkrecht zu der Längsebene des Formkörpers von weniger als 15 Ohm·mm, mit einer Zugfestigkeit von 15 bis 25 MPa und mit einer Impermeabilität von weniger als 5·10⁻³ mg/(s·m²) erhalten werden.

Schließlich enthält die zu verdichtende Mischung gemäß einer vierten besonders bevorzugten Ausführungsform der vorliegenden Erfindung 0,5 bis 50 Gew.-%, bevorzugt 2 bis 30 Gew.-%, besonders bevorzugt 5 bis 20 Gew.-%, ganz besonders bevorzugt 8 bis 12 Gew.-% und höchst bevorzugt etwa 10 Gew.-% Partikel aus Polyvinylidenfluorid. Zwar kann der Formkörper neben dem Polyvinylidenfluorid und dem Graphit noch Füllstoffe enthalten, was jedoch nicht erforderlich und auch nicht bevorzugt ist. Daher besteht der erfindungsgemäße Formkörper gemäß dieser Ausführungsform bevorzugt aus der vorgenannte Menge Polyvinylidenfluorid und Rest expandierter Graphit. Bei dieser Ausführungsform können insbesondere Formkörper mit einem spezifischen elektrischen Widerstand senkrecht zu der Längsebene des Formkörpers von weniger als 15 Ohm·mm, mit einer Zugfestigkeit von 15 bis 25 MPa und mit einer Impermeabilität von weniger als 1·10⁻³ mg/(s·m²) erhalten werden.

Ein weiterer Gegenstand der vorliegenden Erfindung ist die Verwendung eines zuvor beschriebenen Schichtverbundwerkstoffes oder einer zuvor beschriebenen Bipolarplatte zur Herstellung einer Redox-Flow-Batterie oder eines Stapels mehrerer aneinander angrenzender Redox-Flow-Zellen.

Ferner betrifft die vorliegende Erfindung ein Verfahren zur Herstellung eines zuvor beschriebenen Schichtverbundwerkstoffes, welches die nachfolgenden Schritte umfasst:
a) Vermischen von Graphitpartikeln mit wenigstens einem festen organischen Additiv zu einer Mischung,
b) Verdichten der in dem Schritt a) erhaltenen Mischung, um so einen graphithaltigen Formkörper zu erhalten,
c) Bereitstellen wenigstens einer Lage eines textilen Flächengebildes und
d) Verbinden der in dem Schritt c) bereitgestellten wenigstens einen Lage eines textilen Flächengebildes und des in dem Schritt b) erhaltenen graphithaltigen Formkörpers.

Vorzugsweise wird das erfindungsgemäße Verfahren kontinuierlich durchgeführt, um so die erfindungsgemäßen Formkörper schnell, einfach und kostengünstig herzustellen.

Die kontinuierliche Verfahrensführung der Verfahrensschritte a) und b) kann beispielsweise in einem Rohrleitungssystem durchgeführt werden, in dem das Vermischen gemäß dem Verfahrensschritt a) so durchgeführt wird, dass einem Graphitpartikel enthaltendem Gasstrom ein festes organisches Additiv beispielsweise über eine Förderschnecke zugeführt wird und der so erhaltene, vermischte, Graphitpartikel und organisches Additiv enthaltende Gasstrom zum Verdichten gemäß dem Verfahrensschritt b) durch eine Walze geführt wird. So lassen sich nicht nur die Graphitpartikel und das Additiv schnell und einfach miteinander vermischen, sondern insbesondere schonend, d.h. ohne größere mechanische Beanspruchung, vermischen, so dass ein Zerkleinern, wie Zermahlen, der Feststoffpartikel bei dem Vermischen, wie dies bei dem Vermischen in einem statischen oder dynamischen Rührer für mehrere Minuten oder gar Stunden zwangsläufig auftritt, vermieden wird. Dadurch werden die vorstehenden vorteilhaften Eigenschaften des in dem erfindungsgemäßen Schichtverbundwerkstoffes enthaltenen Formkörper, vor allem eine hohe Zugfestigkeit sowie eine hohe Querfestigkeit, begünstigt.

Bei dem erfindungsgemäßen Verfahren wird mithin vor dem Verdichten kein Vermischen in einer statischen oder dynamischen Rühreinrichtung für mehr als 5 Minuten, vor allem für mehr als 20 Minuten und insbesondere für mehr als 1 Stunde durchgeführt.

Gemäß einer weiteren bevorzugten Ausführungsform der vorliegenden Erfindung wird die Graphitpartikel und Additiv enthaltende Mischung bei dem Verdichten oder nach dem Verdichten gemäß dem Verfahrensschritt b) geschmolzen und/oder gesintert. Im Rahmen der vorliegenden Erfindung wurde überraschenderweise festgestellt, dass dadurch die Impermeabilität des Formkörpers gegenüber Flüssigkeiten und Gasen weiter gesteigert werden kann. Ohne an eine Theorie gebunden werden zu wollen, wird es erachtet, dass durch ein solches Schmelzen bzw. Sintern die Verbindung der Graphitpartikel mit den Additivpartikeln verbessert wird und durch das dann dünnflüssige Additiv weitere Poren geschlossen und Kontaktpunkte erzeugt werden.

Zur endgültigen Formgebung kann ein separater Formgebungsschritt erfolgen, bei welchem der Formkörper beispielsweise durch Umformen, Profilieren, Heißpressen, Thermoumformen, Umkanten, Tiefziehen, Prägen oder Stanzen ausgebildet wird.

Außerdem kann der Formkörper in einer Pressform erhitzt werden, wodurch bestimmte Profile, Formen, Wellen und/oder Prägungen erzeugt werden. Das Additiv stabilisiert diese Formen und verhindert das von herkömmlichen Graphitfolien bekannte Rückverformen. Die durch die vorliegende Erfindung erzeugte mechanische Belastbarkeit erlaubt es erstmalig, solche Verfahren anzuwenden.

Nachfolgend wird die vorliegende Erfindung rein beispielhaft anhand vorteilhafter Ausführungsformen und unter Bezugnahme auf die beigefügten Zeichnungen beschrieben.

Dabei zeigen:
- Figur 1: einen graphithaltigen Formkörper gemäß dem Stand der Technik und
- Figur 2: einen Schichtverbundwerkstoff mit einem graphithaltigen Formkörper gemäß einem Ausführungsbeispiel der vorliegenden Erfindung.

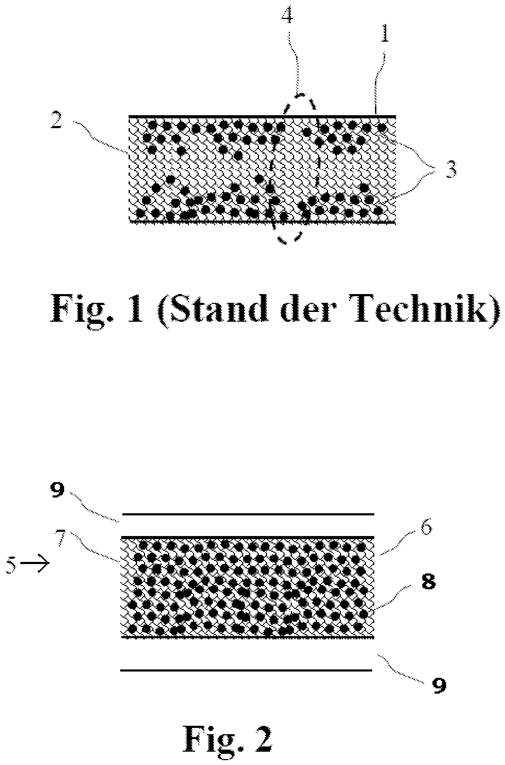

In der Figur 1 ist ein schematischer Querschnitt eines als Platte ausgebildeten graphithaltigen Formkörpers 1 gemäß dem Stand der Technik dargestellt. Dieser Formkörper 1 enthält verpressten, expandierten Graphit 2 und ein flüssiges Bindemittel 3, wobei das Bindemittel 3 nachträglich durch Schmelzimprägnierung von den Seitenflächen des Formkörpers 1 in den Formkörper 1 eingebracht worden ist. Aufgrund des Einbringens des Bindemittels 3 durch Schmelzimprägnierung ist dieses nur ungleichmäßig und vor allem oberflächlich in den Formkörper 1 eingedrungen, weswegen vor allem der zwischen den Oberflächenbereichen liegende innere Bereich, wie beispielsweise der in der ovalen, gestrichelten Umrandung liegende Bereich 4, nur wenig Bindemittel 3 enthält bzw. nahezu bindemittelfrei ist. Aufgrund dessen variieren die Eigenschaften des Formkörpers 1, insbesondere die mechanische Festigkeit und die Dichtigkeit, des Formkörpers 1 vor allem in der Tiefenrichtung bzw. z-Richtung, wobei der zwischen den Oberflächenbereichen liegende innere Bereich des Formkörpers 1 eine schlechtere Dichtigkeit und schlechtere mechanische Eigenschaften als die Oberflächenbereiche des Formkörpers 1 aufweist.

Der in der Figur 2 dargestellte Schichtverbundwerkstoff 5 gemäß der vorliegenden Erfindung enthält einen Formkörper 6, der aus Partikeln 7 aus expandiertem Graphit, welche in bekannter Weise wurm- oder ziehharmonikaförmig ausgestaltet sind, sowie aus Additivpartikeln 8 besteht. Im Unterschied zu dem in der Figur 1 gezeigten Formkörper 1 gemäß dem Stand der Technik sind die Additivpartikel 7 in dem in dem erfindungsgemäßen Schichtverbundwerkstoff 5 enthaltenen Formkörper 6 in allen Dimensionen des Formkörpers 6 gleichmäßig verteilt, und zwar insbesondere auch in dem zwischen den Oberflächenbereichen liegenden inneren Bereich des Formkörpers 6. Auf den beiden Außenflächen des Formkörpers 6 ist jeweils eine Lage aus textilem Flächengebilde bzw. Filz 9 aufgebracht und mit dem Formkörpers 6 mittels eines Klebstoffes (nicht dargestellt) verbunden.

Zur Herstellung des in der Figur 2 dargestellten, in dem Schichtverbundwerkstoff 5 enthaltenden Formkörpers 6 wurden zunächst die Graphitpartikel 7 mit den organischen Additivpartikeln 8 homogen vermischt, bevor die so hergestellte Mischung verdichtet und zu der gewünschten Form geformt wurde.

Nachfolgend wird die vorliegende Erfindung anhand von diese erläuternden, diese aber nicht einschränkenden Beispielen weiter beschrieben.

### Beispiele

### Beispiel 1

Expandierter Graphit mit einem Schüttgewicht von 3,5 g/l wurde mit einem Polypropylenpulver, nämlich mit Licocene PP 2602 der Firma Clariant, Deutschland, zu einer 80 Gew.-% expandierten Graphit und 20 Gew.-% Polypropylenpulver enthaltenden Mischung versetzt und anschließend in einem Behälter für 1 Minute vermischt.

Die so erhaltene Mischung wurde dann in ein Stahlrohr mit 90 mm Durchmesser überführt, mit einem Druckkolben durch das eigene Körpergewicht verpresst und als Vorpressling mit einer Dichte von ca. 0,07 g/cm³ entnommen. Anschließend wurde der Vorpressling mit einer Presse auf die gewünschte Folienstärke von 0,6 mm komprimiert und die so entstandene dotierte Folie wurde bei 180°C für 60 Minuten konditioniert, um den Kunststoff aufzuschmelzen.

Der so erhaltene Formkörper wies ein bei einer Flächenpressung von 20 MPa mit Helium als Gas (1 bar Helium Prüfgassinnendruck) in einer Messapparatur in Anlehnung an die DIN 28090-1 bei Raumtemperatur gemessene Impermeabilität senkrecht zu seiner Längsebene von 1·10⁻³ mg/(s·m²) auf. Dieser Wert und andere Eigenschaften des Formkörpers sind in der untenstehenden Tabelle 1 zusammengefasst.

Der Formkörper wurde dann einseitig mit dem von der Firma SGL Carbon GmbH unter der Handelsbezeichnung SIGRATHERM GFD5 vertriebenen Graphitfilz verklebt. Hierzu wurde der 0,6 mm dicke Formkörper auf eine Größe 50 x 50 mm zugeschnitten und dann wurde auf diesen mittels eines Spatels der von der Firma SGL Carbon GmbH unter der Handelsbezeichnung V 58 a vertriebene Klebstoff auf Basis von graphitgefülltem Phenolharz in einer Menge von 0,04 g/cm² Formkörper aufgebracht, bevor abschließend der Graphitfilz auf den Klebstoff aufgebracht und dann der Klebstoff für 2 Stunden bei 150°C mit einer Auflast von 2 kg gehärtet wurde.

Für den so erhaltenen Schichtverbundwerkstoff wurde gemäß der DIN 51911 bei 20 °C der spezifisch elektrische Widerstand in Dickenrichtung bestimmt, wobei sich ein Wert von 7,7 Ohm mm ergab. Die Ergebnisse sind in der untenstehenden Tabelle 2 zusammengefasst.

Aufgrund des Einsatzes eines elektrisch leitenden Klebstoffs weist der Schichtverbundwerkstoff einen vergleichsweise niedrigen elektrischen Widerstand auf. Aufgrund des Zusatzes von organischem Additiv in dem Formkörper bzw. der Bipolarplatte weist die Bipolarplatte eine hohe Impermeabilität vor allem gegenüber Flüssigkeiten auf, ohne dass das organische Additiv den elektrischen Widerstand des Schichtverbundwerkstoffes nachteilig beeinflusst.

### Beispiel 2

Es wurde gemäß dem für das Beispiel 1 beschriebenen Verfahren ein Schichtverbundwerkstoff hergestellt, ausgenommen, dass dabei der Formkörper und der Graphitfilz ohne Klebstoff miteinander verbunden wurden.

Für den so erhaltenen Schichtverbundwerkstoff wurde gemäß der DIN 51911 bei 20 °C der spezifische elektrische Widerstand in Dickenrichtung bestimmt, wobei sich ein Wert von 10,8 Ohm mm ergab, also ein etwas höher elektrischer Widerstand als für den Schichtverbundwerkstoff gemäß dem Beispiel 1, in dem ein leitfähiger Klebstoff eingesetzt wurde. Die Ergebnisse sind in der untenstehenden Tabelle 2 zusammengefasst.

### Beispiel 3

Es wurde gemäß dem für das Beispiel 1 beschriebenen Verfahren ein Schichtverbundwerkstoff hergestellt, ausgenommen, dass dabei der Formkörper und der Graphitfilz ohne Klebstoff miteinander verbunden wurden. Der Filzkörper wurde vielmehr auf den Formkörper aufgelegt und für Stunden bei 180 °C mit einer Auflast von 2 kg kontaktiert. Durch das Aufschmelzen des in der Bipolarplatte vorhandenen Additivs kam es zu einer direkten Verklebung bzw. Verschweißung des graphithaltigen Formkörpers und dem Filzkörper.

Für den so erhaltenen Schichtverbundwerkstoff wurde gemäß der DIN 51911 bei 20 °C der spezifische elektrische Widerstand in Dickenrichtung bestimmt, wobei sich ein ähnlicher Wert wie für den Schichtverbundwerkstoff gemäß dem Beispiel 2 ergab.

### Veraleichsbeispiel 1

Gemäß dem für das Beispiel 1 beschriebenen Verfahren wurde eine Formkörper in Form einer Graphitfolie hergestellt, ausgenommen, dass zu deren Herstellung ausschließlich expandierter Graphit und kein Additiv eingesetzt wurde.

Der so erhaltene Formkörper wies eine bei einer Flächenpressung von 20 MPa mit Helium als Gas (1 bar Helium Prüfgassinnendruck) in einer Messapparatur in Anlehnung an die DIN 28090-1 bei Raumtemperatur gemessene Impermeabilität senkrecht zu seiner Längsebene von 1.10⁻² mg/(s·m²) auf. Dieser Wert zusammen und andere Eigenschaften des Formkörpers sind in der untenstehenden Tabelle 1 zusammengefasst

Ein aus diesem Formkörper wie in dem Beispiel 1 beschrieben hergestellter Schichtverbundwerkstoff wies einen ähnlichen spezifischen elektrischen Widerstand in Dickenrichtung wie der Verbundwerkstoff des Beispiels 3 auf.

**Tabelle 1: Eigenschaften der Formkörper**

| Probe | Dicke der Folie [mm] | Dichte der Folie [g/cm³] | Impermeabilität/Leckage [Mg/(s·m²)] |
|---|---|---|---|
| Beispiel 1 | 0,6 | 1,7 | 1·10⁻³ |
| Vergleichsbeispiel 1 | 0,6 | 1,7 | 1·10⁻² |

**Tabelle 2: Eigenschaften der Schichtverbundwerkstoffe**

| Probe | Spezifisch elektrischer Widerstand in Dickenrichtung |
|---|---|
| | [Ohm mm] |
| Beispiel 1 | 7,7 |
| Beispiel 2 | 10,8 |

Diese Beispiele zeigen, dass der Zusatz von organischem Additiv in den Formkörper bzw. die Bipolarplatte des Schichtverbundwerkstoffes die Impermeabilität der Bipolarplatte erhöht, ohne den spezifischen elektrischen Widerstand des Schichtverbundwerkstoffes in Dickenrichtung signifikant negativ zu beeinflussen.

### Bezugszeichenliste

- 1: Formkörper gemäß dem Stand der Technik
- 2: (expandierter) Graphit
- 3: Bindemittel
- 4: Bereich des Formkörpers
- 5: Schichtverbundwerkstoff gemäß der vorliegenden Erfindung
- 6: graphithaltiger Formkörper
- 7: Partikel aus (expandiertem) Graphit
- 8: Additivpartikel
- 9: textiles Flächengebilde bzw. Filz

## Patentansprüche

1. Schichtverbundwerkstoff (5), insbesondere zur Verwendung In einer Redox-Flow-Batterie, wobei der Schichtverbundwerkstoff (5) wenigstens eine Lage eines textilen Flächengebildes (9) und wenigstens einen graphithaltigen Formkörper (6) enthält, wobei der graphithaltige Formkörper (6) durch ein Verfahren erhältlich ist, bei dem Graphitpartikel (7) mit wenigstens einem festen organischen Additiv (8) zu einer Mischung vermischt werden und die so erhaltene Mischung anschließend verdichtet wird, wobei das wenigstens eine feste organische Additiv (8) und die daraus hergestellte Mischung vor dem Verdichten nicht geschmolzen und nicht gesintert werden.

2. Schichtverbundwerkstoff (5) nach Anspruch 1,
**dadurch gekennzeichnet, dass**
bei der Herstellung des graphithaltigen Formkörpers (6) als Graphitpartikel (7) Partikel aus expandiertem Graphit (7) eingesetzt werden, welcher bevorzugt aus Naturgraphit mit einem gemäß dem in der DIN 66165 spezifizierten Messerfahren und Siebsatz bestimmten mittleren Partikeldurchmesser (d₅₀) von wenigstens 149 µm und bevorzugt von wenigstens 180 µm hergestellt worden ist.

3. Schichtverbundwerkstoff (5) nach Anspruch 2,
**dadurch gekennzeichnet,**
**dass** die Partikel aus expandiertem Graphit (7) ein Schüttgewicht von 0,5 bis 95 g/l, vorzugsweise von 1 bis 25 g/l und besonders bevorzugt von 2 bis 10 g/l aufweisen.

4. Schichtverbundwerkstoff (5) nach zumindest einem der vorhergehenden Ansprüche,
**dadurch gekennzeichnet, dass**
der graphithaltigen Formkörper (6) eine bei einer Flächenpressung von 20 MPa mit Helium als Gas (1 bar Helium Prüfgassinnendruck) in einer Messapparatur in Anlehnung an die DIN 28090-1 bei Raumtemperatur gemessene Impermeabilität senkrecht zu seiner Längsebene von weniger als 10⁻¹ mg/(s·m²), bevorzugt von weniger als 10⁻² mg/(s·m²) und besonders bevorzugt von weniger als 90⁻³ mg/(s·m²) aufweist.

5. Schichtverbundwerkstoff (5) nach zumindest einem der vorhergehenden Ansprüche,
**dadurch gekennzeichnet, dass**
der graphithaltigen Formkörper (6) einen gemäß der DIN 51911 mit einer Auflast von 50 N bei einer Fläche von 50 mm senkrecht zu seiner Längsebene gemessenen spezifischen elektrischen Widerstand von weniger als 20 Ω·mm und bevorzugt von weniger als 15 Ω·mm aufweist.

6. Schichtverbundwerkstoff (5) nach zumindest einem der vorhergehenden Ansprüche,
**dadurch gekennzeichnet, dass**
die zu verdichtende Mischung 1 bis 50 Gew.-%, bevorzugt 3 bis 30 Ges.-% und besonders bevorzugt 5 bis 25 Gew.-% eines oder mehrerer organischer Additive (8) enthält.

7. Schichtverbundwerkstoff (5) nach zumindest einem der vorhergehenden Ansprüche,
**dadurch gekennzeichnet, dass**
die zu verdichtende Mischung als organisches Additiv (8) wenigstens ein Polymer ausgewählt aus der Gruppe bestehend aus Polyethylen, Polypropylen, Ethylen-Tetrafluorethylen-Copolymeren, Polyvinylidenfluorid, Polytetrafluorethylen und beliebigen Mischungen von zwei oder mehr der vorgenannten Verbindungen enthält.

8. Schichtverbundwerkstoff (5) nach Anspruch 7,
**dadurch gekennzeichnet, dass**
die zu verdichtende Mischung 0,5 bis 50 Gew.-%, bevorzugt 2 bis 30 Gew.-%, besonders bevorzugt 5 bis 20 Gew.-%, ganz besonders bevorzugt 8 bis 12 Ges.-% und höchst bevorzugt 10 Ges.-% Partikel aus Polyvinylidenfluorid und vorzugsweise Rest Partikel aus expandiertem Graphit enthält.

9. Schichtverbundwerkstoff (5) nach zumindest einem der vorhergehenden Ansprüche,
**dadurch gekennzeichnet, dass**
bei der Herstellung des graphithaltigen Formkörpers (6) organische(s) Addttiv(e) (8) mit einem gemäß der ISO 13320 bestimmten mittleren Partikeldurchmesser (d₅₀) von 1 bis 500 µm, vorzugsweise von 1 bis 150 µm, besonders bevorzugt von 2 bis 30 µm und ganz besonders bevorzugt von 3 bis 15 µm eingesetzt wird/werden.

10. Schichtverbundwerkstoff (5) nach zumindest einem der vorhergehender Ansprüche,
**dadurch gekennzeichnet, dass**
der wenigstens eine graphithaltige Formkörper (6) eine Dichte von wenigstens 1,0 g/cm³, bevorzugt von 1,2 bis 1,8 g/cm³ und besonders bevorzugt von 1,4 bis 1,7 g/cm³ aufweist.

11. Schichtverbundwerkstoff (5) nach zumindest einem der vorergehenden Ansprüche,
**dadurch gekennzeichnet, dass**
der wenigstens eine graphithaltige Formkörper (6) eine Dicke von 0,02 bis 3 mm, bevorzugt von 0,2 bis 1.0 mm und besonders bevorzugt von 0,5 bis 0,8 mm aufweist.

12. Schichtverbundwerkstoff (5) nach zumindest einem der vorhergehenden Ansprüche,
**dadurch gekennzeichnet, dass**
die wenigstens eine Lage des textilen Flächengebildes (9) aus der Gruppe ausgewählt ist, weich aus Geweben, Gewirken, Gestricken, Papieren, Gelegen, Vliesen, Filzen (9) und beliebigen Kombinationen von zwei oder mehr der vorgenannten Strukturen besteht.

13. Schichtverbundwerkstoff (5) nach zumindest einem der vorhergehenden Ansprüche,
**dadurch gekennzeichnet, dass**
die wenigstens eine Lage des textilen Flächengebildes (9) Kohlenstoff- oder Graphitfasern enthält, insbesondere daraus aufgebaut ist.

14. Schichtverbundwerkstoff (5) nach zumindest einem der vorhergehenden Ansprüche,
**dadurch gekennzeichnet, dass**
die wenigstens eine Lage des textilen Flächengebildes (9) und die wenigstens eine Lage des graphithaltige Formkörpers (6) direkt oder mittels eines Klebstoffes miteinander verbunden sind.

15. Schichtverbundwerkstoff (5) nach Anspruch 14,
**dadurch gekennzeichnet, dass**
die wenigstens eine Lage des textilen Flächengebildes (9) und die wenigstens eine Lage des graphithaltigen Formkörpers (6) mittels eines Klebstoffes miteinander verbunden sind, wobei der Klebstoff ein Pech, ein Phenolharz, ein Furanharz oder eine Mischung aus zwei oder mehr der vorgenannten Verbindungen ist, welcher bevorzugt mit Metallpartikeln, insbesondere Silberpartikeln oder Nickelpartikeln, Kohlenstoffpartikeln oder Graphitpartikeln als Füllstoff versetzt ist.

16. Verfahren zur Herstellung eines Schichtverbundwerkstoffes (5) nach zumindest einem der Ansprüche 1 bis 15, welches die nachfolgenden Schritte umfasst:
a) Vermischen von Graphitpartikeln (7) mit wenigstens einem festen organischen Additiv (8) zu einer Mischung,
b) Verdichten der In dem Schritt a) erhaltenen Mischung, um so einen graphithaltigen Formkörper (6) zu erhalten,
c) Bereitstellen wenigstens einer Lage eines textilen Flächengebildes (9) und
d) Verbinden der in dem Schritt c) bereitgestellten wenigstens einen Lage eines textilen Flächengebildes (9) und des in dem Schritt b) erhaltenen graphithaltige Formkörpers (6).

## Claims

1. Layered composite material (5), in particular for use in a redox flow battery, wherein the layered composite material (5) contains at least one layer of a textile sheeting (9) and at least one graphite-containing shaped body (6), the graphite-containing shaped body (6) being obtainable by a method in which graphite particles (7) are mixed with at least one solid organic additive (8) to form a mixture and the mixture thus obtained is subsequently compressed, the at least one solid organic additive (8) and the mixture produced therefrom not being melted and not being sintered prior to compression.

2. Layered composite material (5) according to claim 1, **characterised in that** particles of expanded graphite (7), which has preferably been produced from natural graphite having an average particle diameter (d₅₀) of at least 149 µm and preferably of at least 180 µm as determined in accordance with the measurement method and set of sieves specified in DIN 66165, are used as the graphite particles (7) when producing the graphite-containing solid body (6).

3. Layered composite material (5) according to claim 2, **characterised in that** the particles of expanded graphite (7) have a bulk density of 0.5 to 95 g/l, preferably of 1 to 25 g/l and particularly preferably of 2 to 10 g/l.

4. Layered composite material (5) according to at least one of the preceding claims, **characterised in that** the graphite-containing shaped body (6) has an impermeability perpendicular to the longitudinal plane thereof of less than 10⁻¹ mg/(s·m²), preferably of less than 10⁻² mg/(s·m²) and particularly preferably of less than 10⁻³ mg/(s·m²), as measured at room temperature in a measurement apparatus in accordance with DIN 28090-1 at a surface pressure of 20 MPa using helium as the gas (1 bar helium test gas internal pressure).

5. Layered composite material (5) according to at least one of the preceding claims, **characterised in that** the graphite-contaning shaped body (6) has an electrical resistivity of less than 20 Ω·mm and preferably of less than 15 Ω·mm as measured perpendicular to the longitudinal plane thereof in accordance with DIN 51911 with a load of 50 N for an area of 50 mm.

6. Layered composite material (5) according to at least one of the preceding claims, **characterised in that** the mixture to be compressed contains 1 to 50 % by weight, preferably 3 to 30 % by weight and particularly preferably 5 to 25 % by weight of one or more organic additives (8).

7. Layered composite material (5) according to at least one of the preceding claims, **characterised in that** the mixture to be compressed contains as an organic additive (8) at least one polymer selected from the group consisting of polyethylene, polypropylene, ethylene tetrafluoroethylene copolymers, polyvinylidene fluoride polytetrafluoroethylene and any desired mixtures of two or more of said compounds.

8. Layered composite material (5) according to claim 7, **characterised in that** the mixture to be compressed contains 0.5 to 50 % by weight, preferably 2 to 30 % by weight, particularly preferably 5 to 20 % by weight, even more preferably 8 to 12 % by weight and most preferably 10 % by weight of particles of polyvinylidene fluoride and preferably the remainder particles of expanded graphite.

9. Layered composite material (5) according to at least one of the preceding claims, **characterised in that** organic additive(s) (8) having an average particle diameter (d₅₀) of 1 to 500 µm, preferably of 1 to 150 µm, particularly preferably of 2 to 30 µm and even more preferably of 3 to 15 µm as determined in accordance with ISO 13320 are used when producing the graphite-containing shaped body (6).

10. Layered composite material (5) according to at least one of the preceding claims, **characterised in that** the at least one graphite-containing shaped body (6) has a density of at least 1.0 g/cm³, preferably of 1.2 to 1.8 g/cm³ and particularly preferably of 1.4 to 1.7 g/cm³.

11. Layered composite material (5) according to at least one of the preceding claims, **characterised in that** the at least one graphite-containing shaped body (6) has a thickness of 0.02 to 3 mm, preferably of 0.2 to 1.0 mm and particularly preferably of 0.5 to 0.8 mm.

12. Layered composite material (5) according to at least one of the preceding claims, **characterised in that** the at least one layer of the textile sheeting (9) is selected from the group consisting of woven fabrics, knitted fabrics, knotted fabrics, papers, rovings, non-wovens, felts (9) and any desired combinations of two or more of said structures.

13. Layered composite material (5) according to at least one of the preceding claims, **characterised in that** the at least one layer of the textile sheeting (9) contains, in particular is formed from, carbon fibres or graphite fibres.

14. Layered composite material (5) according to at least one of the preceding claims, **characterised in that** the at least one layer of the textile sheeting (9) and the at least one layer of the graphite-containing shaped body (6) are interconnected directly or by means of an adhesive.

15. Layered composite material (5) according to claim 14, **characterised in that** the at least one layer of the textile sheeting (9) and the at least one layer of the graphite-containing shaped body (6) are interconnected by means of an adhesive, the adhesive being a pitch, a phenol resin, a furan resin or a mixture of two or more of said compounds, to which metal particles, in particular silver particles or nickel particles, carbon particles or graphite particles are preferably added as a filler.

16. Method for producing a layered composite material (5) according to at least one of claims 1 to 15, comprising the following steps:
a) mixing graphite particles (7) with at least one solid organic additive (8) to form a mixture,
b) compressing the mixture obtained in step a) so as to obtain a graphite-containing shaped body (6),
c) providing at least one layer of a textile sheeting (9), and
d) connecting the at least one layer of a textile sheeting (9) provided in step c) and the graphite-containing shaped body (6) obtained in step b).

## Revendications

1. Matériau composite en couches (5), en particulier destiné à une utilisation dans une batterie à circulation d'oxydoréduction, dans lequel le matériau composite en couches (5) contient au moins une couche d'une structure textile plane (9) et au moins un corps moulé graphiteux (6), dans lequel le corps moulé graphiteux (6) est obtenu par un procédé, selon lequel des particules de graphite (7) sont mélangées avec au moins un additif organique solide (8) pour donner lieu à un mélange et le mélange ainsi obtenu est ensuite compacté, dans lequel l'au moins un additif organique solide (8) et le mélange en résultant ne sont ni fondus ni frittés avant le compactage.

2. Matériau composite en couches (5) selon la revendication 1, **caractérisé en ce que** des particules composées de graphite expansé (7) sont utilisées sous la forme de particules de graphite (7) lors de la fabrication du corps moulé graphiteux (6), lequel graphite expansé (7) a de préférence été fabriqué à partir de graphite naturel avec un procédé de mesure spécifié conformément à la norme DIN 66165 et un jeu de tamis d'un diamètre de particules (d₅₀) moyen déterminé d'au moins 149 µm et de préférence d'au moins 180 µm.

3. Matériau composite en couches (5) selon la revendication 2, **caractérisé en ce que** les particules composées de graphite expansé (7) présentent une densité apparente de 0,5 à 95 g/l, de préférence de 1 à 25 g/l et plus préférablement de 2 à 10 g/l.

4. Matériau composite en couches (5) selon tout au moins l'une des revendications précédentes, **caractérisé en ce que** le corps moulé graphiteux (6) présente une imperméabilisé inférieure à 10⁻¹ mg/(s·m²), de préférence inférieure à 10⁻² mg/(s·m²) et plus préférablement inférieure à 10⁻³ mg/(s·m²), selon une ligne perpendiculaire par rapport à son plan longitudinal et mesurée dans un appareil de mesure, en s'appuyant sur la norme DIN 28090-1, à la température ambiante et à une pression de surface de 20 MPa en utilisant de l'hélium comme gaz (pression intérieure du gaz de référence, c'est-à-dire l'hélium, égale à 1 bar).

5. Matériau composite en couches (5) selon tout au moins l'une des revendications précédentes, **caractérisé en ce que** le corps moulé graphiteux (6) présente une résistance électrique spécifique inférieure à 20 Ωmm et de préférence inférieure à 15 Ωmm, mesurée conformément à la norme DIN 51911, avec une charge de 50 N pour une surface de 50 mm et selon une ligne perpendiculaire par rapport à son plan longitudinal.

6. Matériau composite en couches (5) selon tout au moins l'une des revendications précédentes, **caractérisé en ce que** le mélange à compacter contient de 1 à 50 % en poids, de préférence de 3 à 30 % en poids et plus préférablement de 5 à 25 % en poids d'un ou de plusieurs additifs organiques (8).

7. Matériau composite en couches (5) selon tout au moins l'une des revendications précédentes, **caractérisé en ce que** le mélange à compacter sous la forme d'un additif organique (8) contient au moins un polymère sélectionné parmi le groupe constitué du polyéthylène, du polypropylène, des copolymères d'éthylène et de tétrafluoroéthylène, du polyfluorure de vinylidène, du polytétrafluoroéthylène et de n'importe quel mélange de deux ou plus des composés susmentionnés.

8. Matériau composite en couches (5) selon la revendication 7, **caractérisé en ce que** le mélange à compacter contient de 0,5 à 50 % en poids, de préférence de 2 à 30 % en poids, plus préférablement de 5 à 20 % en poids, très préférablement de 8 à 12 % en poids et le plus préférablement de 10 % en poids de particules constituées de polyfluorure de vinylidène et de préférence de particules résiduelles constituées de graphite expansé.

9. Matériau composite en couches (5) selon tout au moins l'une des revendications précédentes, **caractérisé en ce que** lors de la fabrication du corps moulé graphiteux (6), un ou plusieurs additifs organiques (8) sont utilisés, lequel ou lesquels présentent un diamètre moyen de particules (d₅₀) déterminé conformément à la norme ISO 13320 de 1 à 500 µm, de préférence de 1 à 150 µm, plus préférablement de 2 à 30 µm et très préférablement de 3 à 15 µm.

10. Matériau composite en couches (5) selon tout au moins l'une des revendications précédentes, **caractérisé en ce que** l'au moins un corps moulé graphiteux (6) présente une densité d'au moins 1,0 g/cm³, de préférence de 1,2 à 1,8 g/cm³ et plus préférablement de 1,4 à 1,7 g/cm³.

11. Matériau composite en couches (5) selon tout au moins l'une des revendications précédentes, **caractérisé en ce que** l'au moins un corps moulé graphiteux (6) présente une épaisseur de 0,02 à 3 mm, de préférence de 0,2 à 1,0 mm et plus préférablement de 0,5 à 0,8 mm.

12. Matériau composite en couches (5) selon tout au moins l'une des revendications précédentes, **caractérisé en ce que** l'au moins une couche de la structure textile plane (9) est sélectionnée parmi le groupe qui est constitué d'étoffes tissées, d'étoffes à mailles, d'étoffes en tricot, de papiers, de tulles, de matériaux non tissés, de feutres (9) et de n'importe quelle combinaison de deux ou plus des structures susmentionnées.

13. Matériau composite en couches (5) selon tout au moins l'une des revendications précédentes, **caractérisé en ce que** l'au moins une couche de la structure textile plane (9) contient des fibres de carbone ou des fibres de graphite et est en particulier constituée de ces matières fibreuses.

14. Matériau composite en couches (5) selon tout au moins l'une des revendications précédentes, **caractérisé en ce que** l'au moins une couche de la structure textile plane (9) et l'au moins une couche du corps moulé graphiteux (6) sont fiées l'une à l'autre directement ou au moyen d'un adhésif.

15. Matériau composite en couches (5) selon la revendication 14, **caractérisé en ce que** l'au moins une couche de la structure textile plane (9) et l'au moins une couche du corps moulé graphiteux (6) sont liées l'une à l'autre au moyen d'un adhésif, dans lequel l'adhésif est une poix, une résine phénolique, une résine de furanne ou un mélange de deux ou plus des composés susmentionnés, lequel adhésif est mélangé sous la forme d'une matière de remplissage, de préférence avec des particules de métal, en particulier des particules d'argent ou des particules de nickel, des particules de carbone ou des particules de graphite.

16. Procédé destiné à la fabrication d'un matériau composite en couches (5) selon tout au moins l'une des revendications 1 à 15, lequel comprend les phases suivantes :
a) le mélange de particules de graphite (7) avec au moins un additif organique solide (8) pour donner lieu à un mélange ,
b) le compactage du mélange obtenu dans la phase a) pour ainsi obtenir un corps moulé graphiteux (6) ;
c) la mise en place d'au moins une couche d'une structure textile plane (9) ; et
d) la liaison de l'au moins une couche d'une structure textile plane (9) mise en place dans la phase c) avec le corps moulé graphiteux (6) obtenu dans la phase b).
